# EUROPEAN PATENT APPLICATION

(11) **EP 4 523 545 A1**
(43) Date of publication of application: **19.03.2025**
(21) Application number: 23803637.0
(22) Date of filing: 12.05.2023
(51) Int. Cl.: A23J 3/14, A23J 3/00, A23J 3/16, A23L 5/10, A23L 13/40

(54) **PLANT PROTEIN COMPOSITION**

(30) Priority: 13.05.2022 JP 2022079799
(71) Applicant: NISSIN FOODS HOLDINGS CO., LTD., Yodogawa-ku Osaka-shi, Osaka 532-8524 (JP)
(72) Inventor: MATSUDA, Takahiro, Osaka-shi Osaka 532-8524 (JP); MIYAZAKi, Aoi, Osaka-shi Osaka 532-8524 (JP)
(74) Representative: Mewburn Ellis LLP
(86) International application number: PCT/JP2023/017926
(87) International publication number: WO 2023/219163

(57) **Abstract**

A novel meat-like plant protein composition that can be used as fake meat (meat substitute) is developed. The plant protein composition is prepared by hydrolyzing a plant protein to prepare a peptide, crosslinking the peptide to obtain a crosslinked peptide, and mixing the crosslinked peptide with sugar, amino acid, and a second plant protein. Moreover, it is preferable to prepare the plant protein composition by mixing and heating the crosslinked peptide, sugar, and amino acid in advance, and then mixing the resulting mixture with a second plant protein. Further, it is preferable to further mix fat or oil, or fatty acid, in the plant protein composition.

## Description

### TECHNICAL FIELD

The present invention relates to a meat-like plant protein composition (meat substitute) using a crosslinked peptide obtained by crosslinking a plant protein-derived peptide obtained by hydrolyzing a plant protein.

### BACKGROUND ART

In recent years, with the trend towards environmental protection and health consciousness, the movement towards meat substitutes has become active in countries around the world. Further, various types of meat substitute technique are currently being developed. For example, the following prior art discloses a simulated seafood composition.

### CITATION LIST

### PATENT LITERATURE

Patent Literature 1: Japanese Translation of PCT International Application Publication No. 2010-504103

The above prior art relates to a simulated seafood composition comprising a structured plant protein product and fatty acid. On the other hand, in addition to this technique, it is also possible to consider the formulation and configuration of meat-like plant protein compositions.

### SUMMARY OF INVENTION

### TECHNICAL PROBLEM

Accordingly, the present inventors were challenged to develop a novel meat-like plant protein composition.

### SOLUTION TO PROBLEM

As a result of intensive research, the present inventors have found that a meat-like plant protein composition with excellent taste or flavor can be obtained by using a crosslinked peptide obtained by crosslinking a plant protein-derived peptide obtained by hydrolyzing a plant protein. The present invention has thus been completed.

That is, the first invention of the present application (claim 1) is:
"A plant protein composition prepared by hydrolyzing a first plant protein to prepare a peptide, crosslinking the peptide to obtain a crosslinked peptide, and mixing the crosslinked peptide with sugar, amino acid, and a second plant protein."

Next, in the invention according to claim 1, a preferred method is such that the crosslinked peptide, sugar, and amino acid are mixed and heated in advance, and then mixed with a second plant protein.

That is, the second invention of the present application (claim 2) is:
"The plant protein composition according to claim 1, which is prepared by mixing and heating the crosslinked peptide, sugar, and amino acid in advance, and then mixing the resulting mixture with a second plant protein."

Next, in the plant protein composition according to claim 1, it is also preferable to mix fat or oil and/or fatty acid.

That is, the third invention of the present application (claim 3) is:
"The plant protein composition according to claim 1, wherein fat or oil, or fatty acid, is further mixed in the plant protein composition."

Next, in the plant protein composition according to claim 2, it is also preferable to mix fat or oil and/or fatty acid.

That is, the fourth invention of the present application (claim 4) is:
"The plant protein composition according to claim 2, wherein fat or oil, or fatty acid, is further mixed in the plant protein composition."

Next, in the plant protein composition according to claim 1, it is also preferable to mix fat or oil and/or fatty acid.

That is, the fifth invention of the present application (claim 5) is:
"The plant protein composition according to claim 1, wherein methylcellulose and/or kanten or agar is further mixed in the plant protein composition."

Next, in the invention according to claim 2, it is also preferable to use methylcellulose and/or kanten or agar.

That is, the sixth invention of the present application (claim 6) is:
"The plant protein composition according to claim 2, wherein methylcellulose and/or kanten or agar is further mixed in the plant protein composition."

Next, in the invention according to claim 3, it is also preferable to use methylcellulose and/or kanten or agar.

That is, the seventh invention of the present application (claim 7) is:
"The plant protein composition according to claim 3, wherein methylcellulose and/or kanten or agar is further mixed in the plant protein composition."

Next, in the invention according to claim 4, it is also preferable to use methylcellulose and/or kanten or agar.

That is, the eighth invention of the present application (claim 8) is:
"The plant protein composition according to claim 4, wherein methylcellulose and/or kanten or agar is further mixed in the plant protein composition."

Next, the applicant of the present application is also intended for a heated plant protein composition obtained by further heating the plant protein composition according to any one of claims 1 to 8.

That is, the ninth invention of the present application (claim 9) is:
"A heated plant protein composition obtained by heating the plant protein composition according to any one of claims 1 to 8."

Next, the invention according to claim 9 may be further dried to obtain a heated plant protein composition.

That is, the tenth invention of the present application (claim 10) is:
"A dried heated plant protein composition obtained by further drying the heated plant protein composition according to claim 9."

### ADVANTAGEOUS EFFECTS OF INVENTION

The present invention can be used to provide a meat-like plant protein composition with excellent flavor etc. In addition, the meat-like plant protein composition of the present invention can be suitably used in various food industries.

### DESCRIPTION OF EMBODIMENTS

The details of the present invention will be described below.

The first invention of the present application is a "plant protein composition obtained by mixing a crosslinked peptide obtained by crosslinking a plant protein-derived peptide obtained by hydrolyzing a first plant protein, with sugar, amino acid, and a second plant protein."

### • Plant protein composition

The plant protein composition as mentioned in the present invention uses a plant protein as a main raw material, and has a meat-like texture or flavor. The plant protein composition of the present invention can be used as minced meat, and can be used as various meat substitutes, for such as hamburger, fried chicken, meatballs, and grilled meat. The plant protein composition of the present invention can also be used as a substitute for fish meat, minced fish, or the like.

The plant protein composition as mentioned in the present invention can be prepared from only a plant raw material that does not contain an animal-derived raw material; however, it is of course that the plant protein composition of the present invention may be not only a type prepared from such a complete plant raw material, but also one partially containing an animal-derived raw material.

The plant protein composition as mentioned in the present invention thus includes various types.

### • Crosslinked peptide obtained by preparing plant protein-derived peptide obtained by hydrolyzing first plant protein, and crosslinking the peptide

The present invention uses a crosslinked peptide obtained by crosslinking a plant protein-derived peptide obtained by hydrolyzing a first plant protein.

Here, the first plant protein is not particularly limited, and usable examples thereof include soybean protein, pea protein, fava bean protein, chickpea protein, mung bean protein, rice protein, brown rice protein, linseed protein, and the like.

In particular, preferred among these are soybean protein, pea protein, fava bean protein, rice protein, and brown rice protein.

Further, soybean protein and rice protein are most preferred.

Next, the first plant protein is hydrolyzed. For hydrolysis, various methods, such as a method using an enzyme and a method using hydrochloric acid, can be used. However, preferred is a method using an enzyme. The enzyme is not particularly limited, and various proteases can be used.

Specific usable examples include various endopeptidases and exopeptidases.

More specific usable examples include trypsin, chymotrypsin, elastase, papain, calpain, lysosomal cathepsin, pepsin, rennin, thermolysin, carboxypeptidase, and various other proteases.

Further, more specifically, it is also preferable to use, for example, Alcalase (registered trademark) and Flavourzyme (registered trademark).

Alcalase (registered trademark) for plant protein extraction is a versatile endoprotease and enables extensive hydrolysis. It is preferable to use this endoprotease to degrade plant proteins in the first step of the hydrolysis process. It may also be used in combination with other proteases.

Flavourzyme (registered trademark) for plant protein extraction is a mixture of endopeptidase and exopeptidase, and has the advantage of unique flavor production and removal of bitterness.

Next, the enzyme treatment time is not particularly limited, but is suitably approximately 2 hours to 6 hours.

Next, the plant protein-derived peptide obtained after hydrolysis is crosslinked. The hydrolyzed soybean peptide has a slightly bitter taste. On the other hand, this peptide can be crosslinked to reduce the bitter taste. The hydrolyzed soybean peptide is processed using a crosslinking enzyme. The enzyme used is, for example, Transglutaminase.

The crosslinked peptide preferably has a molecular weight of approximately 1000 to 5000 Da. Peptides with a molecular weight in this range are considered to be involved in flavor enhancement.

### • Sugars

As the sugars, various sugars can be used. It is possible to use various sugars, including monosaccharides such as glucose and fructose, sugar alcohols, disaccharides such as sucrose, and polysaccharides such as dextrin.

However, preferred monosaccharides are xylose, ribose, arabinose, fructose, and glucose. Further, a preferred disaccharide is sucrose.

It is of course that the above sugars may be incorporated by methods not only using the sugars themselves, but also using food ingredients that substantially contain the respective sugars.

### • Amino acid

As the amino acid, various amino acids can be used. Preferred are cysteine, cystine, and methionine. Further, it is also preferable to use taurine, which is produced from cysteine through an enzymatic reaction.

As for cysteine, it is of course possible to not only use cysteine itself as the amino acid, but also use food ingredients rich in cysteine and add the food ingredients to substantially incorporate cysteine. Specific examples thereof include cysteine-containing yeast containing about 7% of cysteine, wheat proteins, and hydrolysates of egg white, egg yolk, etc.

Further, as for cystine, it is also of course possible to not only use cystine itself as the amino acid, but also use food ingredients rich in cystine and add the food ingredients to substantially incorporate cystine. Specific examples thereof include wheat proteins and hydrolysates of egg white, egg yolk, etc.

Next, as for methionine, it is of course possible to not only use methionine itself as the amino acid, but also use food ingredients rich in methionine and add the food ingredients to substantially incorporate methionine. Specific examples thereof include hydrolysates of egg white, egg yolk, etc.

**In** addition, it is of course that the food ingredients for incorporating the above amino acids may be not only plant food ingredients, but also animal food ingredients.

### • Second plant protein

**In** the present invention, a second plant protein, which serves as a primary component of the plant protein composition of the present invention, is used in addition to the first plant protein for the crosslinked peptide described above. It is of course that the second plant protein in the present invention may be a plant protein of the same type as the first plant protein described above. The second plant protein may also be another type of plant protein. Various plant proteins can be used.

Here, the second plant protein is not particularly limited; however, usable examples thereof include soybean protein, pea protein, fava bean protein, chickpea protein, mung bean protein, rice protein, brown rice protein, linseed protein, and the like. In particular, it is preferable to use soybean protein among these proteins.

### • Preparation of heated crosslinked peptide etc. by heating crosslinked peptide

In the present invention, it is also preferable to use the crosslinked peptide described above, heat it with sugar and amino acid to cause a Maillard reaction (aminocarbonyl reaction), prepare a heated crosslinked peptide in advance, and mix the heated crosslinked peptide (Maillard crosslinked peptide) with a second protein.

The Maillard crosslinked peptide can be produced by various methods, and can be prepared by mixing the plant protein-derived crosslinked peptide with the above-mentioned sugar, amino acid, and optionally water etc., and heating the mixture. It is of course that in the preparation of the Maillard crosslinked product, other sugars (monosaccharides and polysaccharides), proteins, and other components may also be contained at the same time, in addition to the above-mentioned sugar and amino acid.

Next, heating can be performed in a hot water bath or in vegetable oil or animal fat or oil. It is also possible to use an autoclave, a frying pan, or the like. The heating temperature is not particularly limited, but is generally within the range of about 80°C to 150°C. In particular, the heating temperature is more preferably about 90°C to 130°C.

The heating time is preferably long at low temperatures and short at high temperatures. Specifically, after heating to the above temperature, heating is performed for about 1 minute to 60 minutes.

In the production method of the present invention, aroma component analysis was performed on a reaction solution obtained by the Maillard reaction of the crosslinked peptide, xylose as sugar, and cysteine as amino acid. As a result, thiazole, 5-methylthiophene-2-aldehyde, 2-phenylethyl alcohol, and decanoic acid, as well as indole, 2-methyl-3-furanthiol, 2-thiophenecarboxaldehyde, m-cresol, bis(2-methyl-3-furyl) disulfide, nonanoic acid, 2-acetylthiazole, and the like, which are known as meat-like aroma components, were detected. These compounds are considered to contribute to the effect of flavor enhancement.

### • Fat or oil, or fatty acid

In the plant protein composition of the present invention, vegetable fat or oil, and optionally animal fat or oil, may be added. The use of fat or oil can enhance meatiness and impart a more meat-like flavor.

Usable vegetable fats or oils are not particularly limited. Examples thereof include palm oil, rapeseed oil, rice oil, corn oil, olive oil, Shirashime oil, sunflower oil, linseed oil, cottonseed oil, and various other vegetable fats or oils. In addition, it is also preferable that the vegetable fat or oil contains unsaturated fatty acids, such as oleic acid, linoleic acid, and linolenic acid, as its constituent fatty acids.

Next, in the present invention, fat or oil in a solid state can be used as part of the plant protein composition at ordinary temperature of about 15°C to 25°C. Examples thereof include palm oil and coconut oil, which are vegetable fats or oils. Crushing and mixing these fats or oils makes it possible to reproduce a state in which fat components are scattered, for example, as in marbled beef, and to improve the appearance, flavor, etc. of the plant protein composition.

Next, in the present invention, it is also possible to use animal fat or oil as part of the plant protein composition, except for use in so-called vegetarian or vegan products. Usable examples of the animal fat or oil include pork fat, beef tallow, chicken oil, and various other oils.

Next, in the present invention, it is also possible to add fatty acid. Usable fatty acids include, but are not limited to, linoleic acid, linolenic acids (α-linolenic acid and γ-linolenic acid), oleic acid, arachidonic acid, and the like.

### • Methylcellulose and/or kanten or agar

In the present invention, methylcellulose and/or kanten or agar can be used. The use of methylcellulose can enhance binding properties and improve the texture. Further, for the addition of methylcellulose, it is preferably mixed with the above-mentioned fat or oil for preparation.

Next, in the present invention, it is also preferable to use kanten or agar. In particular, it is preferable that gelatinized kanten or agar is crushed and added in the preparation of the plant protein composition. When the plant protein composition is heated, kanten dissolves, which may make it possible to reproduce a so-called gravy-like state that occurs when meat is heated.

It is also preferable that kanten or agar contains the crosslinked peptide described above.

### • Group of micronutrients

Vitamins, minerals, and other micronutrients may be added. As vitamins, various vitamins, such as fat-soluble vitamins and water-soluble vitamins, can be added. Examples thereof include vitamin A, vitamin E, vitamin D, vitamin K, vitamin B group (B1: thiamine, B2: riboflavin, vitamin B6: pyridoxal, pyridoxamine, and pyridoxine, B2: cobalamin), vitamin C (ascorbic acid), pantothenic acid, folic acid, niacin, biotin, and the like.

Next, examples of minerals include calcium, magnesium, phosphorus, sodium, potassium, zinc, iron, copper, chromium, cobalt, selenium, manganese, molybdenum, and the like; and particularly include calcium, magnesium, iron, and the like. In addition, it is also possible to add iodine, sulfur, chlorine, and the like.

### • Various starches, cereal flour, protein ingredients, etc.

In the present invention, various starches, protein ingredients, and the like can be used. Usable starches include various modified starches, cereal flour, and protein powder.

Cellulose fibers can also be used to give meat a fibrous and shape-retaining effect.

Moreover, the plant protein composition of the present invention may further contain a heme protein. The heme protein as mentioned herein refers to a protein bound to heme (an iron complex of porphyrin or chlorin), and examples thereof include hemoglobin, myoglobin, cytochrome, and the like.

### • Foods using the plant protein composition of the present invention

The plant protein composition of the present invention can be used as various meat-like foods, fake meat, meat substitutes, and meat substitute products. Specifically, the plant protein composition of the present invention can be used for fake meat (meat substitute) for beef, pork, chicken, fish, or the like. Moreover, it is of course possible to use other seasonings and additives (natural products, seasonings, flavorings, etc.) depending on the type of meat.

For example, the plant protein composition of the present invention can be used as a meat substitute for various meat products, such as hamburger, mince balls, fried chicken, pork cutlet, and grilled meat.

Next, the plant protein composition of the present invention can be frozen, or can be refrigerated for a predetermined period of time.

Further, the plant protein composition of the present invention can also be dried for use as an ingredient for instant food products (instant noodles such as instant cup noodles and instant bagged noodles, instant cup rice, instant soup, etc.). In particular, instant noodles (instant cup noodles) and instant cup rice often use dried ingredients (dried ingredients obtained by hot-air drying or freeze drying) as their ingredients. The present invention can be suitably used as a dried ingredient for them.

It is of course that carbohydrates such as starch, salt, seasonings such as soy sauce and sauce, spices, and flavorings may be used as other components that constitute the plant protein composition of the present invention.

### EXAMPLES

Examples of the present invention will be described below; however, the present invention is not limited to the following Examples.

### <Test Example 1> (Comparison of amount of crosslinked soybean peptides)

### [Test Section 1-1] (1% peptide)

### 1) Preparation of crosslinked peptide

6 g of isolated soybean protein (Solpy 4000H, produced by The Nisshin OilliO Group, Ltd.) was dissolved in 100 g of water, and the enzyme, Alcalase (registered trademark, produced by Novozymes A/S), at 0.024 AU/g (enzyme/substrate) was added and maintained at 58°C at a pH of 8.0 for 3 hours to perform a first hydrolysis reaction.

Next, the enzyme, Flavourzyme (registered trademark, produced by Novozymes A/S), at 2.0 LAPU/g (enzyme/substrate) was added and maintained at 50°C at a pH of 6.5 for 4 hours to perform a second hydrolysis reaction.

The hydrolysis reaction liquid after the hydrolysis reaction was centrifuged, and the upper layer was freeze-dried to obtain a freeze-dried product of soybean peptide.

Next, 3 g of the freeze-dried product was dissolved in 30 g of water, transglutaminase (produced by Amano Enzyme Inc.) at 108 GTU/g (enzyme/substrate) was added and maintained at 45°C at a pH of 8.0 for 5 hours to perform a crosslinking reaction with the enzyme. After the reaction, centrifugation was performed, and the supernatant was freeze-dried to obtain a soybean crosslinked peptide.

### 2) Heating of crosslinked peptide

1.0 g of the freeze-dried soybean crosslinked peptide, 0.15 g of xylose, 0.1 g of cysteine, and 10 g of water were collected in a test tube and heated in boiling water for 5 minutes. After heating, 0.2 g of agar was added before cooling, and dissolved by stirring. Thereafter, the mixture was solidified by refrigeration to prepare a crosslinked peptide after the heating process.

### 3) Preparation of methylcellulose slurry

7.5 g of sunflower oil was added to 2.0 g of methylcellulose (VEGEDAN (registered trademark), produced by DPNB) and dispersed by stirring. Then, 28.35 g of water was added, and the mixture was further stirred with a stirrer for 1 minute, then transferred to a tray, and refrigerated to prepare a methylcellulose slurry.

### 4) Preparation of plant protein composition

1000 g of water was added to about 100 g of soybean plant protein (SOY MINCE, produced by NDC) as a plant protein, and the mixture was boiled for 3 minutes, followed by washing with running water. Thereafter, the mixture was placed in a colander and allowed to stand to prepare a granular plant protein after reconstitution with water (return ratio: 260 to 270%).

The entire amount of the methylcellulose slurry was added to 40 g of the reconstituted plant protein. Further, 2.0 g of starch and 0.7 g of salt were added, and further the entire amount of the crosslinked peptide after the heating process was added. Further, 5 g of crushed coconut oil and 3 g of water were added, and the whole mixture was thoroughly stirred to prepare a putty-like plant protein composition.

### 5) Molding and heating of putty-like plant protein composition

50 g of the putty-like plant protein composition was packed into a round mold with a diameter of 8 cm, shaped, placed on a frying pan heated to 150°C, cooked for 2 minutes and 30 seconds, and then flipped over to cook the other side for 2 minutes and 30 seconds.

The resulting heated plant protein composition was tasted and sensorily evaluated.

### - Sensory evaluation method -

The sensory evaluation was conducted by five experienced technicians from three aspects, i.e., aroma, taste, and texture, and comprehensive evaluation was conducted by synthesizing these aspects.

As for the evaluation of each item, first of all, the aroma was evaluated on a 10-point scale from 1 (poor aroma) to 10 (best aroma), with aroma strength, aroma desirability, and meat flavor as the main criteria.

Next, the taste was evaluated on a 10-point scale from 1 (poor taste) to 10 (best aroma), with taste strength, richness, and aftertaste (persistence) as the main criteria.

Next, the texture was evaluated on a 10-point scale from 1 (poor texture) to 10 (best texture).

In the comprehensive evaluation, the aroma, taste, and texture were comprehensively evaluated on a 10-point scale from 1 (poor) to 10 (best). In the comprehensive evaluation, generally a score of 5.7 or more was considered acceptable. Moreover, a score of 6.0 or more is preferable, and a score of 7.0 or more is more preferable. Further, a score of 8.0 or more was considered the most preferable. The evaluation results are shown in Table 1.

### [Test Section 1-2] (0.5% peptide)

The procedure was carried out in the same manner as in Test Section 1, except that 0.5 g of the freeze-dried soybean crosslinked peptide was collected in a test tube in 2) Heating of crosslinked peptide in Test Section 1, and 3.5 g of water was added together with coconut oil in 4) Preparation of plant protein composition. The results are shown in Table 1.

### [Test Section 1-3] (2.0% peptide)

The procedure was carried out in the same manner as in Test Section 1, except that 2.0 g of the freeze-dried soybean crosslinked peptide was collected in a test tube in 2) Heating of crosslinked peptide in Test Section 1, and 2.0 g of water was added together with coconut oil in 4) Preparation of plant protein composition. The results are shown in Table 1.

### [Test Section 1-4] (No peptide)

The procedure was carried out in the same manner as in Test Section 1, except that none of the freeze-dried soybean crosslinked peptide, xylose, and cysteine was added in 2) Heating of crosslinked peptide in Test Section 1, and 4.25 g of water was added together with coconut oil in 4) Preparation of plant protein composition. The results are shown in Table 1.

**[Table 1]**

| Test Section | Content | Aroma | Taste | Texture | Comprehensive evaluation |
|---|---|---|---|---|---|
| Test Section 1-1 | 1.0% peptide | 7.3 | 8.0 | 5.8 | 8.1 |
| Test Section 1-2 | 0.5% peptide | 6.1 | 6.6 | 5.8 | 6.4 |
| Test Section 1-3 | 2.0% peptide | 7.1 | 8.0 | 5.6 | 7.4 |
| Test Section 1-4 | No peptide | 5.0 | 5.0 | 5.0 | 5.0 |

It was found that the addition of the crosslinked peptide improved the evaluation of aroma, taste, and texture in comparison with the case where the crosslinked peptide was not added.

### <Test Example 2> (Comparison of peptide preparation method)

Variations to the soybean peptide preparation method were tested.

### [Test Section 2-1] (No crosslinked peptide)

The treatment was carried out in the same manner as in Test Section 1-1, except that only xylose, cysteine, water, and agar were used for the treatment without adding the crosslinked peptide in 2) Heating of crosslinked peptide in Test Section 1-1 of Test Example 1. The results are shown in Table 2.

### [Test Section 2-2] (Peptide only hydrolyzed not crosslinked)

The treatment was carried out in the same manner as in Test Section 1-1, except that the freeze-dried product of the soybean peptide that had been only hydrolyzed was used in place of the freeze-dried soybean crosslinked peptide in 2) Heating of crosslinked peptide in Test Section 1-1 of Test Example 1. The results are shown in Table 2.

### [Test Section 2-3]

The treatment was carried out in the same manner as in Test Section 1-1. The results are shown in Table 2.

**[Table 2]**

| Test Section | Content | Aroma | Taste | Texture | Comprehensive evaluation |
|---|---|---|---|---|---|
| Test Section 2-1 | No peptide | 5.4 | 5.8 | 5.0 | 5.6 |
| Test Section 2-2 | Hydrolyzed peptide | 5.1 | 5.3 | 4.4 | 5.4 |
| Test Section 2-3 | Same as Test Section 1-1 | 7.3 | 8.0 | 5.8 | 8.1 |

It was found that without the addition of the crosslinked peptide or with the peptide that had been only hydrolyzed, the evaluation of aroma, taste, and texture was poor.

### <Test Example 3> (Effect of changing fat or oil or adding fatty acid in preparation of soybean peptide)

The influence of adding fat or oil and/or fatty acid in the heating and preparation of peptide compounds on finally obtained plant protein compositions was examined.

### [Test Section 3-1] (Linoleic acid)

The treatment was carried out in the same manner as in Test Section 1-1, except that in addition to the freeze-dried soybean crosslinked peptide, xylose, cysteine, and water, 1 g of sunflower oil and 0.004 g of linoleic acid were also added and collected in a test tube in "1) Heating of crosslinked peptide" in Test Section 1-1. The results are shown in Table 3.

### [Test Section 3-2] (Linolenic acid)

The treatment was carried out in the same manner as in Test Section 1-1, except that in addition to the freeze-dried soybean crosslinked peptide, xylose, cysteine, and water, 1 g of sunflower oil and 0.004 g of linolenic acid were also added and collected in a test tube in "1) Heating of crosslinked peptide" in Test Section 1-1. The results are shown in Table 3.

### [Test Section 3-3] (y-Linolenic acid)

The treatment was carried out in the same manner as in Test Section 1-1, except that in addition to the freeze-dried soybean crosslinked peptide, xylose, cysteine, and water, 1 g of sunflower oil and 0.004 g of γ-linolenic acid were also added and collected in a test tube in "2) Heating of crosslinked peptide" in Test Section 1-1. The results are shown in Table 3.

### [Test Section 3-4] (Oleic acid)

The treatment was carried out in the same manner as in Test Section 1-1, except that in addition to the freeze-dried soybean crosslinked peptide, xylose, cysteine, and water, 1 g of sunflower oil and 0.004 g of oleic acid were also added and collected in a test tube in "2) Heating of crosslinked peptide" in Test Section 1-1. The results are shown in Table 3.

### [Test Section 3-5] (Arachidonic acid)

The treatment was carried out in the same manner as in Test Section 1-1, except that in addition to the freeze-dried soybean crosslinked peptide, xylose, cysteine, and water, 1 g of sunflower oil and 0.004 g of arachidonic acid were also added and collected in a test tube in "2) Heating of crosslinked peptide" in Test Section 1-1. The results are shown in Table 3.

### [Test Section 3-6] (Linseed oil)

The treatment was carried out in the same manner as in Test Section 1-1, except that in addition to the freeze-dried soybean crosslinked peptide, xylose, cysteine, and water, 1 g of linseed oil was also added and collected in a test tube in "2) Heating of crosslinked peptide" in Test Section 1-1. The results are shown in Table 3.

### [Test Section 3-7] (Cottonseed oil blend oil)

The treatment was carried out in the same manner as in Test Section 1-1, except that in addition to the freeze-dried soybean crosslinked peptide, xylose, cysteine, and water, 1 g of cottonseed oil blend oil (Bimi-Tokutoku (registered trademark), J-Oil Mills, Inc.) was also added and collected in a test tube in "2) Heating of crosslinked peptide" in Test Section 1-1. The results are shown in Table 3.

**[Table 3]**

| Test Section | Content | Aroma | Taste | Texture | Comprehensive evaluation |
|---|---|---|---|---|---|
| Test Section 3-1 | Linoleic acid | 6.7 | 7.4 | 5.4 | 7.0 |
| Test Section 3-2 | Linolenic acid | 7.4 | 7.9 | 5.5 | 7.9 |
| Test Section 3-3 | γ-Linolenic acid | 6.6 | 6.9 | 5.4 | 6.9 |
| Test Section 3-4 | Oleic acid | 7.7 | 7.9 | 5.4 | 8.3 |
| Test Section 3-5 | Arachidonic acid | 7.9 | 7.6 | 5.5 | 8.2 |
| Test Section 3-6 | Linseed oil | 6.9 | 7.7 | 5.4 | 6.9 |
| Test Section 3-7 | Cottonseed oil blend | 7.7 | 8.1 | 5.6 | 8.3 |

It was found that although various fats or oils, and fatty acids can be used, oleic acid, arachidonic acid, and cottonseed oil are particularly preferred.

### <Test Example 4> (Change of type of sugar)

The influence of changing the type of sugar used in the heating and preparation of crosslinked peptides on finally obtained plant protein compositions was examined.

### [Test Section 4-1] (Xylose)

The treatment was carried out in the same manner as in Test Section 1-1. The results are shown in Table 4.

### [Test Section 4-2] (Ribose)

The treatment was carried out in the same manner as in Test Section 1-1, except that 0.15 g of ribose was used in place of 0.15 g of xylose in "2) Heating of crosslinked peptide" in Test Section 1-1. The results are shown in Table 4.

### [Test Section 4-3] (Arabinose)

The treatment was carried out in the same manner as in Test Section 1-1, except that 0.15 g of arabinose was used in place of 0.15 g of xylose in "2) Heating of crosslinked peptide" in Test Section 1-1. The results are shown in Table 4.

### [Test Section 4-4] (Fructose)

The treatment was carried out in the same manner as in Test Section 1-1, except that 0.15 g of fructose was used in place of 0.15 g of xylose in "2) Heating of crosslinked peptide" in Test Section 1-1. The results are shown in Table 4.

### [Test Section 4-5] (Glucose)

The treatment was carried out in the same manner as in Test Section 1-1, except that 0.15 g of glucose was used in place of 0.15 g of xylose in "2) Heating of crosslinked peptide" in Test Section 1-1. The results are shown in Table 4.

### [Test Section 4-6] (Sucrose)

The treatment was carried out in the same manner as in Test Section 1-1, except that 0.15 g of sucrose was used in place of 0.15 g of xylose in "2) Heating of crosslinked peptide" in Test Section 1-1. The results are shown in Table 4.

**[Table 4]**

| Test Section | Content | Aroma | Taste | Texture | Comprehensive evaluation |
|---|---|---|---|---|---|
| Test Section 4-1 | Xylose | 7.3 | 8.0 | 5.8 | 8.1 |
| Test Section 4-2 | Ribose | 5.9 | 6.3 | 5.6 | 6.0 |
| Test Section 4-3 | Arabinose | 5.9 | 6.4 | 5.5 | 6.1 |
| Test Section 4-4 | Fructose | 5.8 | 6.0 | 5.4 | 5.9 |
| Test Section 4-5 | Glucose | 7.1 | 7.0 | 5.5 | 7.3 |
| Test Section 4-6 | Sucrose | 5.6 | 6.5 | 5.4 | 5.9 |

It was found that although various sugars can be used, xylose and glucose are particularly preferred.

### <Test Example 5> (Change of type of plant protein in preparation of crosslinked peptide)

The influence of changing the type of plant protein used in the preparation of crosslinked peptides on finally obtained plant protein compositions was examined.

### [Test Section 5-1] (Soybean protein)

The treatment was carried out in the same manner as in Test Section 1-1. The results are shown in Table 5.

### [Test Section 5-2] (Pea protein)

The treatment was carried out in the same manner as in Test Section 1-1, except that 6 g of pea protein (PP-CS (Pea Protein), Organo Food Tech Corporation) was used in place of 6 g of the isolated soybean protein in "1) Preparation of crosslinked peptide" in Test Section 1-1. The results are shown in Table 5.

### [Test Section 5-3] (Fava bean protein)

The treatment was carried out in the same manner as in Test Section 1-1, except that 6 g of fava bean protein (Orprotein (registered trademark) FP-AC, Organo Food Tech Corporation) was used in place of 6 g of the isolated soybean protein in "1) Preparation of crosslinked peptide" in Test Section 1-1. The results are shown in Table 5.

### [Test Section 5-4] (Chickpea protein)

The treatment was carried out in the same manner as in Test Section 1-1, except that 6 g of chickpea protein (Orprotein (registered trademark) CP-AC, Organo Food Tech Corporation) was used in place of 6 g of the isolated soybean protein in "1) Preparation of crosslinked peptide" in Test Section 1-1. The results are shown in Table 5.

### [Test Section 5-5] (Mung bean protein)

The treatment was carried out in the same manner as in Test Section 1-1, except that 6 g of mung bean protein (Orprotein (registered trademark) MP-AC, Organo Food Tech Corporation) was used in place of 6 g of the isolated soybean protein in "1) Preparation of crosslinked peptide" in Test Section 1-1. The results are shown in Table 5.

### [Test Section 5-6] (Rice protein)

The treatment was carried out in the same manner as in Test Section 1-1, except that 6 g of rice protein (Rice Protein, vitasol science japan) was used in place of 6 g of the isolated soybean protein in "1) Preparation of crosslinked peptide" in Test Section 1-1. The results are shown in Table 5.

### [Test Section 5-7] (Brown rice protein)

The treatment was carried out in the same manner as in Test Section 1-1, except that 6 g of brown rice protein (Brown Rice Protein, Medience Corporation) was used in place of 6 g of the isolated soybean protein in "1) Preparation of crosslinked peptide" in Test Section 1-1. The results are shown in Table 5.

### [Test Section 5-8] (Linseed protein)

The treatment was carried out in the same manner as in Test Section 1-1, except that 6 g of defatted linseed protein (Organic Flax Seed, Natshell) was used in place of 6 g of the isolated soybean protein in "1) Preparation of crosslinked peptide" in Test Section 1-1. The results are shown in Table 5.

**[Table 5]**

| Test Section | Content | Aroma | Taste | Texture | Comprehensive evaluation |
|---|---|---|---|---|---|
| Test Section 5-1 | Soybean protein | 7.3 | 8.0 | 5.8 | 8.1 |
| Test Section 5-2 | Pea protein | 6.6 | 7.1 | 5.3 | 6.7 |
| Test Section 5-3 | Fava bean protein | 6.1 | 7.0 | 5.4 | 6.5 |
| Test Section 5-4 | Chickpea protein | 6.4 | 6.9 | 5.3 | 6.6 |
| Test Section 5-5 | Mung bean protein | 6.0 | 6.6 | 5.5 | 6.6 |
| Test Section 5-6 | Rice protein | 7.4 | 8.0 | 6.4 | 8.1 |
| Test Section 5-7 | Brown rice protein | 6.0 | 7.0 | 6.1 | 6.7 |
| Test Section 5-8 | Linseed protein | 6.0 | 6.6 | 5.4 | 6.6 |

It was found that although various plant proteins can be used, soybean protein and rice protein are particularly preferred.

### <Test Example 6> (For fried chicken) (cysteine)

The influence of changing the type of amino acid added in the heating and preparation of crosslinked peptide compounds on finally obtained plant protein compositions was examined. In particular, in this Test Example, the effect was examined in the case of producing fake fried chicken-like food (for fried chicken).

### [Test Section 6-1] Type of amino acid (for fake fried chicken)

### 1) Preparation of plant protein composition (for fake fried chicken)

250 g of water was added to 100 g of textured soybean protein (textured vegetable protein: Apex 1000, produced by Fuji Oil Co., Ltd.), and rehydration treatment was performed for 5 hours. The soybean protein after rehydration was crushed by stirring.

Powder (6 g of egg white powder, 0.8 g of salt, 0.7 g of sugar, and 8 g of crushed coconut oil) and 8.5 g of water were added to 62 g of the crushed soybean protein, and 14 g of the heated crosslinked peptide prepared in "1) Preparation of crosslinked peptide" and "2) Heating of crosslinked peptide" in Test Section 1-1 was added. The mixture was mixed, then shaped, and heated at 90 to 95°C for 5 minutes. Thereafter, the resultant was immersed in a mixture of 2 g of salt, 1.2 g of pepper, and 5 g of water for 5 minutes, and a soybean protein composition was molded.

### 2) Batter and dressing

The soy protein composition after molding was coated with a batter liquid containing milk, egg, soft flour, etc. Subsequently, a batter containing soft flour and spices was applied to prepare fake chicken to be fried (for fried chicken).

### 3) Fly processing

The plant protein composition after application was fried in palm oil as frying oil at 180°C for 1 minute, and then further fried at 140°C for 3 minutes.

Thereafter, heating was performed in an oven at 140°C for 5 minutes to complete fake fried chicken.

The fake fried chicken was sensorily evaluated by the sensory evaluation method described in Test Section 1-1.

The results are shown in Table 6.

### [Test Section 6-2] (For cystine)

The treatment was carried out in the same manner as in Test Section 6-1, except that in Test Section 6-1, 0.1 g of cystine was used in place of 0.1 g of cysteine in "2) Heating of crosslinked peptide" in Test Section 1-1. The results are shown in Table 6.

### [Test Section 6-3] (For methionine)

The treatment was carried out in the same manner as in Test Section 6-1, except that in Test Section 6-1, 0.1 g of methionine was used in place of 0.1 g of cysteine in "2) Heating of crosslinked peptide" in Test Section 1-1. The results are shown in Table 6.

### [Test Section 6-4] (For taurine)

The treatment was carried out in the same manner as in Test Section 6-1, except that in Test Section 6-1, 0.1 g of taurine was used in place of 0.1 g of cysteine in "2) Heating of crosslinked peptide" in Test Section 1-1. The results are shown in Table 6.

**[Table 6]**

| Test Section | Amino acid | Aroma | Taste | Texture | Comprehensive evaluation |
|---|---|---|---|---|---|
| Test Section 6-1 | Cysteine | 7.3 | 7.5 | 5.7 | 8.0 |
| Test Section 6-2 | Cystine | 6.3 | 6.8 | 5.7 | 6.7 |
| Test Section 6-3 | Methionine | 6.2 | 6.4 | 5.6 | 6.6 |
| Test Section 6-4 | Taurine | 6.0 | 6.3 | 5.2 | 6.2 |

It was found that cysteine, cystine, and taurine improved the evaluation of aroma, taste, and texture.

The present application is based on Japanese Application No. 2022-079799 filed on May 13, 2022, the contents of which are incorporated herein by reference.

## Claims

1. A plant protein composition, wherein the plant protein composition is prepared by hydrolyzing a first plant protein to prepare a peptide, crosslinking the peptide to obtain a crosslinked peptide, and mixing the crosslinked peptide with sugar, amino acid, and a second plant protein.

2. The plant protein composition according to claim 1, wherein the plant protein composition is prepared by mixing and heating the crosslinked peptide, sugar, and amino acid in advance, and then mixing the resulting mixture with a second plant protein.

3. The plant protein composition according to claim 1, wherein fat or oil, or fatty acid is further mixed in the plant protein composition.

4. The plant protein composition according to claim 2, wherein fat or oil, or fatty acid is further mixed in the plant protein composition.

5. The plant protein composition according to claim 1, wherein methylcellulose and/or kanten or agar is further mixed in the plant protein composition.

6. The plant protein composition according to claim 2, wherein methylcellulose and/or kanten or agar is further mixed in the plant protein composition.

7. The plant protein composition according to claim 3, wherein methylcellulose and/or kanten or agar is further mixed in the plant protein composition.

8. The plant protein composition according to claim 4, wherein methylcellulose and/or kanten or agar is further mixed in the plant protein composition.

9. A heated plant protein composition obtained by heating the plant protein composition according to any one of claims 1 to 8.

10. A dried heated plant protein composition obtained by further drying the heated plant protein composition according to claim 9.
